# NEUE EUROPÄISCHE PATENTSCHRIFT

(11) **EP 2 949 523 B2**
(45) Veröffentlichungstag und Bekanntmachung des Hinweises auf die Entscheidung über den Einspruch: **18.12.2024**
(45) Hinweis auf die Patenterteilung: 25.04.2018
(21) Anmeldenummer: 14169949.6
(22) Anmeldetag: 27.05.2014
(51) Int. Cl.: B60T 7/12, B60T 8/17, B60T 13/66

(54) **Gewichtsunabhängige Sicherheitsbremse**
Weight-independent safety brake
Frein de sécurité indépendant du poids

(43) Veröffentlichungstag der Anmeldung: 02.12.2015
(73) Patentinhaber: Beutler, Jörg, 83607 Holzkirchen (DE)
(72) Erfinder: Beutler, Jörg, 83607 Holzkirchen (DE); Günther, Thomas, 08294 Lößnitz (DE)
(74) Vertreter: Lermer, Christoph

(56) Entgegenhaltungen:
- EP-A1- 1 167 142
- WO-A1-2013/021012
- DE-A1- 10 245 149
- DE-A1- 102011 052 545
- DE-C2- 19 510 755
- Breaking Deceleration Control of Urban Rail Vehicle Based on Smith Predictor M Zhang H Xu 27062013
- Erganzungsreglung NrB007 zur Kraftschlussausnutzung DB EBA VDV 15.11.2012
- Feedback Control of Braking Deceleration on Raily Vehicle M Nankyo T Ishihara H Inooka 06 2006

## Beschreibung

### TECHNISCHES GEBIET

Die vorliegende Anmeldung betrifft ein schienengebundenes Fahrzeug, umfassend eine am Fahrzeug angeordnete Bremseinrichtung, die eine Bremse und eine Bremssteuerungseinrichtung zur Regelung des Bremsvorgangs aufweist, und ein Verfahren zum Abbremsen eines der genannten Fahrzeuge. Insbesondere bezieht sich die Erfindung auf ein Vergnügungsfahrzeug, wie ein Achterbahnfahrzeug, oder ein Transportfahrzeug.

### STAND DER TECHNIK

Im Schienenverkehr, insbesondere in geschlossenen Systemen, wie bei Achterbahnen, in firmeninternen Schienensystemen, etc., sind sowohl Auslastung/ Auslastbarkeit der Kapazitäten als auch Betriebssicherheit von entscheidender Bedeutung. So werden beim Einsatz einer Mehrzahl oder Vielzahl schienengebundener Fahrzeuge in einem Transportsystem häufig die maximalen Auslastungskapazitäten nicht erschöpft, obwohl ein entsprechender Bedarf bestünde. Dies trifft sowohl auf schienengebundene Personenfahrzeuge zu, wie sie in Fahrgeschäften eingesetzt werden, als auch auf Transportsysteme mit Fahrzeugen beispielsweise zum Transport von Waren, Rohstoffen, etc.. Um eine gute Auslastung eines Verkehrssystems, gleichzeitig aber ausreichende Sicherheit zu gewährleisten, wurden Systeme mit externer Steuerung entwickelt, die beispielsweise die Abstände von Eisenbahnfahrzeugen in öffentlichen Schienensystemen erfassen und Mindestabstände zwischen Fahrzeugen sicherstellen, oder für die Einhaltung von Maximalgeschwindigkeiten der Fahrzeuge sorgen, wobei minimal erforderliche Bremswege eine relevante Eingangsgröße sind. Dabei müssen jedoch Sicherheitspuffer einbezogen werden, da sich beispielsweise das Gewicht eines Fahrzeugs, abhängig von der Beladung, bei konstanter Bremskraft auf den Bremsweg auswirkt.

Aus der deutschen Patentanmeldung DE 10 2011 052545 A1 ist ein Verfahren zur Ansteuerung einer Bremseinrichtung eines Fahrzeugs, insbesondere eines Schienenfahrzeugs für den Hochgeschwindigkeitsverkehr durch Vergleich eines Ist-Verzögerungssignals mit einem Soll-Verzögerungssignal bekannt.

Die DE 102 45 149 A1 offenbart eine Bremse, insbesondere zum Einsatz bei schienengebundenen Fahrzeugen, insbesondere für Bahn-Fahrgeschäfte, und ein Verfahren zur Regelung der Bremskraft einer Bremse.

In Fahrzeugen wurden in erster Linie Entwicklungen umgesetzt, die dazu dienen, Bremsvorgänge zu optimieren. So wurden beispielsweise ABS-Systeme entwickelt, die ein Blockieren der Räder während des Bremsvorgangs verhindern und so eine Optimierung der Bremswirkung mit dem Ziel eines kürzesten Bremswegs sicherstellen. Die vom Fahrzeuginsassen vorgegebene Bremskraft wird dabei maximiert.

Für Fahrzeuge, die in geschlossenen Transport- bzw. Schienensystemen eingesetzt werden und deren Bewegungsprofil ggf. von außen gesteuert wird, gelten besondere Steuerungsanforderungen. So beschreibt die Druckschrift EP1230962 eine am Fahrzeug angeordnete Bremse, wobei jeweils vor Fahrtbeginn durch Gewichtsmessung des beladenen Fahrzeugs eine entsprechende Einstellung der am Fahrzeug angeordneten Bremselemente der Wirbelstrombremse für die gesamte folgende Fahrt erfolgt. Diese Vorgehensweise ist jedoch für die Optimierung der Bremswirkung relativ aufwändig und ungenau.

### AUFGABE DER ERFINDUNG

Ausgehend davon besteht die Aufgabe der vorliegenden Erfindung darin, ein schienengebundenes Fahrzeug bereitzustellen, das eine genaue Steuerung der Fahrzeugbewegung in einem Schienensystem erlaubt.

### TECHNISCHE LÖSUNG

Diese Aufgabe wird gelöst durch ein schienengebundenes Fahrzeug nach Anspruch 1 und ein Verfahren nach Anspruch 9. Vorteilhafte Merkmale und bevorzugte Ausführungsformen ergeben sich aus den abhängigen Ansprüchen.

Ein erfindungsgemäßes schienengebundenes Fahrzeug umfasst eine am Fahrzeug angeordnete Bremseinrichtung, die eine Bremse, und eine Bremssteuerungseinrichtung zur Steuerung und/oder Regelung des Bremsvorgangs aufweist, wobei die Bremseinrichtung einen Sensor zur Messung einer Bremsverzögerung des Fahrzeugs aufweist, und die Bremssteuerungseinrichtung derart ausgebildet ist, dass sie die Bremskraft in Abhängigkeit von der gemessenen Bremsverzögerung derart einstellt, dass über einen bestimmten Bremsvorgang eine vordefinierte Bremsverzögerung erzielt wird, wobei eine vorgegebene maximale Bremsverzögerung nicht überschritten wird. Die vordefinierte Bremsverzögerung kann der vorgegebenen maximalen Bremsverzögerung entsprechen. Dass diese nicht überschritten wird kann bedeuten, dass dieser Wert nicht oder nur geringfügig, beispielsweise im Rahmen der Regelungsgenauigkeit, überschritten wird.

Die Bremseinrichtung ist so konzipiert, dass unabhängig von der Beladung mit Passagieren oder Gütern in einem bestimmten vorgegebenen Streckenabschnitt eine vorgegebene, insbesondere eine maximal zulässige Bremsverzögerung, realisiert werden kann, wobei diese maximale Bremsverzögerung nicht überschritten wird. Das Fahrzeug bzw. die Bremseinrichtung/Bremssteuerungseinrichtung regelt dabei die Verzögerung selbst, wodurch fahrzeug- und beladungsspezifische Gegebenheiten von Fahrt zu Fahrt variabel sein können, ohne dass eine Anpassung der Steuerung an diese Gegebenheiten vor Fahrtbeginn erforderlich wäre.

Dies führt zur Möglichkeit einer möglichst hohen Förderkapazität, da notwendige Mindestabstände zwischen zwei aufeinanderfolgenden Fahrzeugen, unabhängig vom (je nach Fahrt möglicherweise variablem) Gewicht der Fahrzeuge, eingehalten werden können. Dazu ist es notwendig, das Fahrzeug zuverlässig mit der maximal zugelassenen Bremsverzögerung abbremsen zu können (die maximal zugelassene Bremsverzögerung wird hinsichtlich Statik und Beladung, z.B. mit Personen, bestimmt). Das erfindungsgemäße Fahrzeug kann selbst einen Antrieb aufweisen oder von außerhalb angetrieben werden. Im Falle angetriebener Fahrzeuge soll ein geregeltes Abbremsen gemäß der Erfindung auch bei einem Ausfall der Antriebe gewährleistet werden.

Übliche Bremseinrichtungen erzeugen dagegen eine bestimmte Bremskraft, die, je nach Beladung des Fahrzeugs, eine unterschiedlich starke Verzögerung des Fahrzeugs erzeugt. So werden schwere Lasten aufgrund des höheren Fahrzeuggewichts langsamer abgebremst als leichte Lasten. Mit Hilfe der Erfindung wird dagegen eine vorgegebene, z.B. eine konstante Bremsbeschleunigung bzw. Bremsverzögerung, erzeugt. Die Bremssteuerungseinrichtung ist im Fall einer konstanten Sollbeschleunigung derart ausgebildet, dass sie die Bremskraft in Abhängigkeit von der gemessenen Bremsverzögerung derart einstellt, dass über einen bestimmten Bremsvorgang eine konstante Bremsverzögerung erzielt wird, wobei die maximale Bremsverzögerung nicht überschritten wird.

Zusammenfassend wird im Rahmen der Erfindung ein schienengebundenes Transportfahrzeug für Material, Personen, Vergnügungsanlagen, etc., bereitgestellt, das eine am Fahrzeug mitfahrende Bremseinrichtung aufweist, die beladungs- und antriebsunabhängig eine fest definierte Bremsverzögerung erzeugt. Die vordefinierte Bremsverzögerung kann konstant über einen bestimmten Streckenabschnitt der Fahrstrecke, oder ortsabhängig von der Position des Fahrzeugs an der Fahrstrecke, oder zeitabhängig von einem bestimmten Startzeitpunkt (z.B. vom Beginn der Fahrt an gemessen oder vom Durchfahren eines Messpunkts entlang der Strecke gemessen) an vorgegeben sein, z.B. durch eine ortsabhängige bzw. zeitabhängige Funktion der Bremskraft.

Außerdem kann ein Bremsverzögerungsprofil realisiert werden, das maximal zulässige Bremsverzögerungen einbezieht. Dies ist eine typische Anforderung an Verkehrssysteme, bei denen eine Steuerung wenigstens teilweise die Funktion des Abbremsens übernimmt, während beispielsweise ein ABS-System lediglich das Blockieren der Räder verhindern soll. Die vorliegende Bremssteuerung zielt auf die zu erzielende Bremswirkung insgesamt ab, die durch eine beschleunigungsabhängige Regelung der Bremsintensität erreicht wird.

Die Regelung kann beispielsweise nach dem Prinzip einer Zweipunktregelung aufgebaut sein: Liegt die Bremsverzögerung oberhalb des (einstellbaren, vorgegebenen) Sollwerts, öffnen die Bremsbacken; liegt der Istwert unter diesem Sollwert, so schließen die Bremsbacken. Die Hysterese, d.h. der Bereich, um den sich der Istwert ändern muss, um ein Umschalten zu bewirken, ist ebenfalls einstellbar. Die Bremsbacken selbst schließen vorzugsweise immer mit derselben Bremskraft.

Die Bremseinrichtung weist insbesondere einen Beschleunigungssensor auf. Dieser kann beispielsweise ein Piezoelement enthalten, auf der Messung von Trägheitskräften einer Testmasse, auf Messungen an Feder-Masse-Systemen, usw., beruhen.

Die Bremssteuerungseinrichtung kann derart ausgebildet sein, dass sie die Bremse so betätigt, dass durch abwechselndes Lösen bzw. Lockern und Schließen der Bremse eine der vordefinierten Bremsverzögerung entsprechende Bremsverzögerung erzeugt wird. Im Betrieb wird eine derartig konzipierte Bremse bei Erreichen einer vorgegebenen und vom Beschleunigungssensor gemessenen Bremsverzögerung betätigt, beispielsweise gelöst und/oder gelockert, um sie gleich darauf wieder zu schließen, so dass in Summe eine annähernd konstante Bremsverzögerung im Bereich der vorgegebenen, beispielsweise der maximal zulässigen Verzögerung erzielt wird.

Vorzugsweise ist die Bremssteuerungseinrichtung derart ausgebildet, dass sie die Bremse so betätigt, dass durch abwechselndes Lösen bzw. Lockern und Schließen der Bremse eine durchschnittliche Bremsverzögerung erzeugt wird, die im Wesentlichen gleich der vordefinierten Bremsverzögerung ist. D.h. es wird abwechselnd eine maximale und minimale Bremswirkung (geschlossene/offene Bremse) erzeugt. Die Dauer der einzelnen Bremsphasen (eine Phase wird als ununterbrochen geschlossen bzw. ununterbrochen offen definiert) bzw. deren Frequenz bestimmt die resultierende Bremswirkung.

In einer bevorzugten Ausführung kann die Bremssteuerungseinrichtung einen Geschwindigkeitssensor zur Messung der Geschwindigkeit des Fahrzeugs aufweisen, und die gemessene Geschwindigkeit an die Bremssteuerungseinrichtung als Parameter für die Regelung der Bremswirkung der Bremse übertragen werden. Der Geschwindigkeitssensor kann zusätzlich zu wenigstens einem Beschleunigungssensor vorgesehen sein. In die Regelung kann die momentane Geschwindigkeit als weitere Regelungseingangsgröße eingehen. Die gemessene Geschwindigkeit kann jedoch auch als Wert für eine Randbedingung der Beschleunigungsregelung verwendet werden.

Die Bremssteuerungseinrichtung kann derart ausgebildet sein, dass sie die Bremse so betätigt, dass durch abwechselndes Lösen bzw. Lockern und Schließen der Bremse eine durchschnittliche Bremsverzögerung erzeugt wird, bis die Zielgeschwindigkeit erreicht ist, wobei diese nicht überschritten wird.

Vorzugsweise kann die Bremseinrichtung eine Bremsscheibe aufweisen, die mit einem Antriebsrad des Fahrzeugs oder mit einem Bremsrad des Fahrzeugs gekoppelt ist, wobei das Antriebsrad bzw. das Bremsrad form- und/oder reibschlüssig mit einem entsprechenden, wenigstens abschnittsweise entlang der Fahrstrecke angeordneten Element (z.B. einer Zahnstange) zusammenwirkt. Hierbei erfolgt das Bremsen durch Schließen von Bremsbacken an einer mit dem Antriebsrad (oder einem eigenen Bremsrad) verbundenen Bremsscheibe. Das Antriebs- bzw. Bremsrad kann insbesondere formschlüssig (z.B. in eine Zahnstange) oder in einer alternativen Ausführung auch reibschlüssig an der Schiene angreifen. Andere Bremsmethoden sind ebenfalls denkbar, wie z.B. das Öffnen und Schließen von direkt auf die Schiene wirkenden Bremsbacken oder das Ein- und Ausschwenken von Permanentmagneten in an der Schiene befestigten Bremsleisten aus elektrisch leitenden, aber nicht magnetisierbaren Material wie Kupfer oder Aluminium (=Wirbelstrombremse). Das an der Fahrstrecke angeordnete Element zum Abbremsen kann somit eine Laufschiene sein, im Fall einer formschlüssig arbeitenden Bremseinrichtung jedoch auch eine Zahnstange zum Eingriff eines fahrzeugseitig mit der Bremseinrichtung gekoppelten Zahnrads (Bremszahnrad), o.ä..

Vorzugsweise weist die Bremseinrichtung Bremsbacken auf, die auf ein an der Fahrstrecke (stationär) angeordnetes Bauteil, z.B. die Schiene oder eine sonstige feststehende Einrichtung wirken, oder analog dazu Magnete oder elektrisch leitende, nicht magnetisierbare Werkstoffe, die zur Erzeugung eines Wirbelstrombremseffekts eingesetzt werden. Abgesehen vom Einsatz von (Permanent-)Magneten für eine Wirbelstrombremswirkung wäre der Einsatz von Elektromagneten denkbar, die entweder direkt durch Magnetkräfte eine Bremswirkung ausüben oder den Wirbelstromeffekt nutzen können.

Ein erfindungsgemäßes Verfahren zum Abbremsen eines Fahrzeugs wie oben beschrieben, umfasst die Schritte: a) Messung einer Bremsverzögerung des Fahrzeugs mittels eines Beschleunigungssensors; und b) Regelung der Bremsverzögerung durch Betätigen der Bremse derart, dass die Bremsverzögerung einen vorgegebenen Sollwert annimmt, wobei über einen bestimmten Bremsvorgang eine vordefinierte Bremsverzögerung abhängig von der Position des Fahrzeugs gemäß einem in der Bremssteuerungseinrichtung hinterlegten ortsabhängigen Soll-Beschleunigungsprofil oder abhängig von der Zeit gemäß einem in der Bremssteuerungseinrichtung hinterlegten zeitabhängigen Soll-Beschleunigungsprofil erzielt wird.

Der vorgegebene Sollwert kann eine konstante Bremsverzögerung (insbesondere eine maximal zulässige Bremsverzögerung) sein.

Die Regelung kann durch eine Betätigung der Bremse derart erfolgen, dass durch abwechselndes Lösen bzw. Lockern und Schließen der Bremse eine dem Sollwert entsprechende Bremsverzögerung erzeugt wird.

Die Bremse kann wie folgt als Sicherheitsbremse ausgeführt sein, d.h. sie hat die Aufgabe bei einer Störung das Fahrzeug auf 0 km/h abzubremsen. Hierzu schließt die Bremse, beispielsweise die Bremsbacke an der Bremsscheibe, mit einer einheitlichen Bremskraft. Registriert der Beschleunigungssensor, dass die maximal zulässige Bremsverzögerung überschritten wird, lösen die Bremsbacken bis abhängig von der eingestellten Hysterese die Verzögerung wieder vom Maximalwert entfernt ist und entsprechend darunter liegt. In diesem Moment schließt die Bremsbacke wieder und bleibt geschlossen, bis der Beschleunigungssensor ermittelt, dass die maximale Bremsverzögerung erreicht ist. Dann öffnen die Bremsbacken. Dieser Vorgang wiederholt sich, bis das Fahrzeug zum Stillstand kommt oder eine Zielgeschwindigkeit erreicht ist. Die Bremsfrequenz ist dabei unabhängig davon, ob der Sollwert unterschritten oder überschritten ist, sondern stellt sich automatisch über die Hysterese und die aktuellen Fahrbedingungen (Steigung/Gefälle etc.) ein.

Der Verfahrensschritt a) umfasst insbesondere: Messung der Geschwindigkeit des Fahrzeugs und Übertragung der gemessenen Geschwindigkeiten an die Bremssteuerungseinrichtung als Parameter (Eingangsgröße) für die Regelung der Bremswirkung der Bremse.

Die Regelung erfolgt vorzugsweise durch eine Betätigung der Bremse derart, dass durch abwechselndes Lösen bzw. Lockern und Schließen der Bremse eine durchschnittliche Bremswirkung erzeugt wird, bis der Sollwert erreicht ist. Der Sollwert soll nach Möglichkeit nicht oder höchstens im Rahmen der Regelungsgenauigkeit überschritten werden können.

Insbesondere bei nicht angetriebenen Fahrzeugen kann eine mitfahrende, d.h. fahrzeugseitig angeordnete, Bremseinrichtung auch dazu dienen, die Ist-Geschwindigkeit, abhängig insbesondere von Beladung, Wind und/oder Reibung, an eine Soll-Geschwindigkeit anzupassen (bei angetriebenen Fahrzeugen kann für diese Aufgabe im Normalfall der Antrieb eingesetzt werden). Hierzu kann zusätzlich zu einem Beschleunigungssensor oder - bei geringen maximal erforderlichen Bremskräften - auch anstelle des Beschleunigungssensors ein Geschwindigkeitssensor (z.B. basierend auf einem Laufrad) in die Regelung einbezogen werden, sodass die Bremsung genau bis zum Erreichen einer Sollgeschwindigkeit erfolgt.

Aus Sicherheitsgründen kann das Bremssystem auch redundant ausgelegt sein, d.h. es können mehrere Bremsbacken vorgesehen sein, die jeweils von einem eigenen Sensor angesteuert werden.

Für alle genannten Merkmale soll sowohl einzeln als auch in Kombinationen miteinander Schutz beansprucht werden.

### KURZE BESCHREIBUNG DER FIGUREN

Weitere Vorteile und Merkmale der Erfindung werden aus der Beschreibung bevorzugter Ausführungsbeispiele anhand der Figuren deutlich. Es zeigen:
Figur 1 eine schematische Darstellung eines Fahrzeugs gemäß der Erfindung; und
Figur 2 eine schematische, beispielhafte Darstellung eines Beschleunigungsprofils.

### DETAILLIERTE BESCHREIBUNG EINES BEVORZUGTEN AUSFÜHRUNGSBEISPIELS

Das nachfolgend beschriebene Ausführungsbeispiel bezieht sich auf ein schienengebundenes Fahrzeug 1 mit einer Bremseinrichtung gemäß der Erfindung.

Das Fahrzeug 1 weist eine Bremseinrichtung 2, 2', 3, 4, 4' auf, die eine Bremse 2 umfasst, die beispielsweise durch Öffnen und Schließen von Bremsbacken (nicht dargestellt) entweder an einem Laufrad 10 direkt oder an einer Bremsscheibe 2' angreift, die mit dem Laufrad 10 oder einem Bremsrad verbunden/gekoppelt ist. Das Lauf- oder Antriebsrad 10 bzw. das Bremsrad kann reibschlüssig mit der Schiene der Fahrstrecke und/oder formschlüssig beispielsweise mit einer wenigstens abschnittsweise entlang der Fahrstrecke angeordneten Zahnstange zusammenwirken. Bei formschlüssigem Eingriff, der extreme Bremsverzögerungen ermöglicht, ist die Regelung der Beschleunigung im Rahmen der vorliegenden Erfindung besonders sinnvoll, sodass eine maximale Bremsverzögerung nicht überschritten wird.

Außerdem weist die Bremseinrichtung eine Bremssteuerungseinrichtung 3 auf, die als Regelung ("closed-loop") ausgebildet ist. Als Eingangsgröße wird eine durch einen Beschleunigungssensor 4 gemessene (negative) Ist-Beschleunigung (=Bremsverzögerung) verwendet. Die (negative) Ist-Beschleunigung (=Bremsverzögerung) wird mit einer vorgegebenen Soll-Beschleunigung verglichen und durch entsprechende Betätigung der Bremse 2 so geregelt, dass sich die Ist-Beschleunigung innerhalb des Regelungszeitraums stets an die Sollbeschleunigung anpasst. Die Bremsintensität bzw. die Bremsfrequenz (bei intermittierendem Bremsvorgang) wird bei einem Unterschreiten eines Sollwerts der Verzögerung erhöht und bei Überschreiten des Sollwerts der Verzögerung verringert.

Alternativ oder zusätzlich zu einem Beschleunigungssensor 4 kann die Bremseinrichtung 2, 2', 3, 4, 4' einen Geschwindigkeitssensor 4' zur Messung der Geschwindigkeit v des Fahrzeugs 1 aufweisen. Die gemessene Geschwindigkeit v wird an die Bremssteuerungseinrichtung 3 als (zusätzlicher oder einziger) Parameter für die Regelung der Bremswirkung der Bremse 2 übertragen. So kann die Bremswirkung so geregelt werden, dass ein Soll-Geschwindigkeitsprofil realisiert oder eine Ziel-Endgeschwindigkeit erreicht wird, wobei diese nicht überschritten wird.

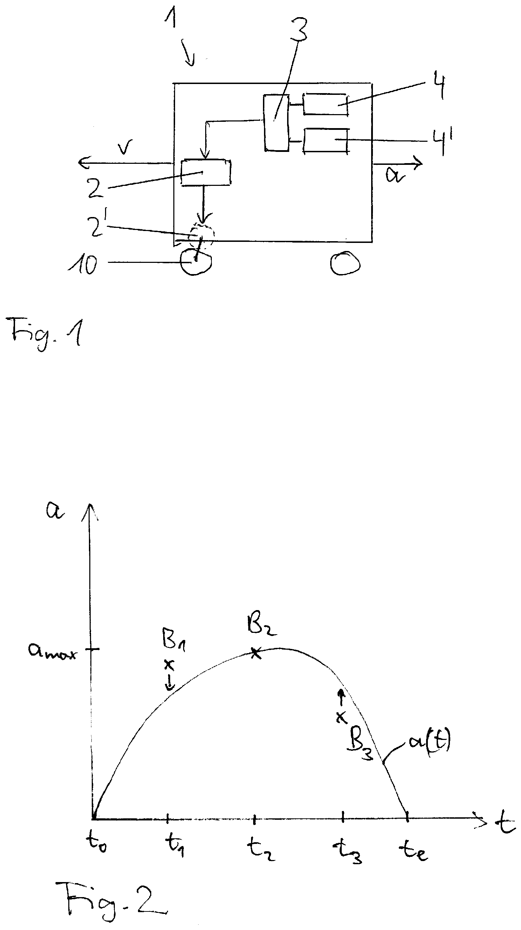

In der Figur 2 ist eine zwischen einem Startzeitpunkt t₀ und einem Endzeitpunkt tₑ für einen Bremsvorgang vorgegebene Sollbeschleunigungskurve a(t) dargestellt. Weicht die gemessene Beschleunigung B1, B2, B3,... vom Sollwert ab, so wird die Bremswirkung so eingestellt, dass eine Regelung zum Sollwert hin erfolgt. Durch die Regelung der Beschleunigung wird, ohne vorherige Gewichtsbestimmungen durchführen zu müssen, eine gewichtsunabhängige Verzögerung realisiert.

In anderen Beispielen könnte der Sollwert zwischen den Zeitpunkten t₀ und tₑ auch konstant sein und beispielsweise die maximale Verzögerung zwischen zwei Streckenpunkten der Fahrstrecke betragen. So würde eine maximal zulässige Verzögerung realisiert werden.

Dadurch können maximale Geschwindigkeiten und minimale Mindestabstände zwischen aufeinanderfolgenden Fahrzeugen umgesetzt werden, was wiederum eine maximale Streckenauslastung (=maximale Förderkapazität) ermöglicht.

Liegt, wie im Ausführungsbeispiel gemäß Fig. 2, die Bremswirkung B1 zu einem Zeitpunkt t₁ oberhalb der maximal zulässigen Bremsverzögerung a(t₁), so wird die Bremsbeschleunigung verringert, die Bremswirkung nimmt somit ab. Dies kann dadurch bewerkstelligt werden, dass die Bremsbacke öffnet und somit keine Bremswirkung erzeugt wird, bis die Bremswirkung betragsmäßig unter den maximal zulässigen Wert a(t₁) abgefallen ist. Entspricht die aktuelle Bremsverzögerung B2 zu einem Zeitpunkt t₂ der Sollverzögerung a(t₂), so wird die Bremswirkung beibehalten. Liegt die Bremsbeschleunigung B3 zu einem Zeitpunkt t₃ unter der vorgegebenen Bremsbeschleunigung a(t₃) zum Zeitpunkt t₃, wird die Bremsbeschleunigung erhöht, d.h. die Bremswirkung B3 wird erhöht. Dies kann dadurch bewerkstelligt werden, dass die Bremsbacke schließt und somit die betragsmäßig maximale Bremswirkung erzeugt wird.

Eine Änderung der Bremswirkung bzw. -intensität wird je nach Art der Bremsen und des Betriebsmodus der Bremsen bewerkstelligt. Wird beispielsweise die Bremse 2 intermittierend betrieben, z.B. durch intermittierendes Öffnen und Schließen der Bremsbacken, so kann durch die Wahl der Frequenz und/oder Dauer des Öffnens/Schließens die Bremswirkung eingestellt werden. Bei einer kontinuierlich wirkenden Bremse wie einer Wirbelstrombremse kann die Bremskraft kontinuierlich eingestellt werden, z.B. durch mehr oder weniger großen Eingriff eines Bremsschwerts in das Magnetfeld.

Die Zeitpunkte t₀ und tₑ, die einen bestimmten Bremsvorgang begrenzen, können vorgegeben oder durch die erfindungsgemäße Bremseinrichtung ermittelt werden. So können die Zeitpunkte t₀ und/oder tₑ durch das Vorbeifahren des Fahrzeugs an bestimmten Streckenpunkten bestimmt werden. Alternativ dazu können die Zeitpunkte durch Erfassung der Fahrzeuggeschwindigkeit v in Abhängigkeit von der erfassten Fahrzeuggeschwindigkeit v bestimmt werden. So kann der Zeitpunkt tₑ beim Erreichen einer bestimmten Geschwindigkeit festgesetzt und der Bremsvorgang zu diesem Zeitpunkt abgebrochen werden.

Alternativ dazu könnten ein Soll-Beschleunigungsprofil und/oder ein Soll-Geschwindigkeitsprofil auch ortsabhängig vorgegeben sein. Erfindungsgemäß ist ein solches Soll-Beschleunigungsprofil in der Steuerungseinrichtung 3 hinterlegt.

## Patentansprüche

1. Schienengebundenes Fahrzeug (1), umfassend eine am Fahrzeug (1) angeordnete Bremseinrichtung (2, 3, 4), die eine Bremse (2) und eine Bremssteuerungseinrichtung (3) zur Regelung des Bremsvorgangs aufweist,
**dadurch gekennzeichnet, dass**
die Bremseinrichtung einen Sensor (4) zur Messung einer Bremsverzögerung des Fahrzeugs (1) aufweist,
in der Bremssteuerungseinrichtung (3) ein zeit- oder ortsabhängiges Soll-Beschleunigungsprofil hinterlegt ist, und
die Bremssteuerungseinrichtung (3) derart ausgebildet ist, dass sie die Bremswirkung der Bremse (2) in Abhängigkeit von der gemessenen Bremsverzögerung derart einstellt, dass über einen bestimmten Bremsvorgang eine vordefinierte Bremsverzögerung gemäß dem zeitabhängigen Soll-Beschleunigungsprofil abhängig von der Zeit bzw. dem ortsabhängigen Soll-Beschleunigungsprofil abhängig von der Position des Fahrzeugs erzielt wird, wobei eine vorgegebene maximale Bremsverzögerung nicht überschritten wird.

2. Fahrzeug (1) nach Anspruch 1, **dadurch gekennzeichnet, dass**
die Bremssteuerungseinrichtung (3) derart ausgebildet ist, dass sie die Bremskraft in Abhängigkeit von der gemessenen Bremsverzögerung derart einstellt, dass über einen bestimmten Bremsvorgang eine konstante Bremsverzögerung erzielt wird.

3. Fahrzeug (1) nach einem der vorhergehenden Ansprüche, **dadurch gekennzeichnet, dass**
der Sensor (4) ein Beschleunigungssensor ist.

4. Fahrzeug (1) nach einem der vorhergehenden Ansprüche, **dadurch gekennzeichnet, dass**
die Bremssteuerungseinrichtung (3) derart ausgebildet ist, dass sie die Bremse (2) so betätigt, dass durch abwechselndes Lösen bzw. Lockern und Schließen der Bremse (2) eine der vordefinierten Bremsverzögerung entsprechende Bremsverzögerung erzeugt wird.

5. Fahrzeug (1) nach einem der vorhergehenden Ansprüche, **dadurch gekennzeichnet, dass**
die Bremssteuerungseinrichtung (3) derart ausgebildet ist, dass sie die Bremse (2) so betätigt, dass durch abwechselndes Lösen bzw. Lockern und Schließen der Bremse (2) eine durchschnittliche Bremsverzögerung erzeugt wird, die im Wesentlichen gleich der vordefinierten Bremsverzögerung ist.

6. Fahrzeug (1) nach einem der vorhergehenden Ansprüche, **dadurch gekennzeichnet, dass**
die Bremssteuerungseinrichtung (3) einen Geschwindigkeitssensor (4') zur Messung der Geschwindigkeit des Fahrzeugs (1) aufweist, und die gemessene Geschwindigkeit an die Bremssteuerungseinrichtung (3) als Parameter für die Regelung der Bremswirkung der Bremse (2) übertragen wird.

7. Fahrzeug (1) nach einem der vorhergehenden Ansprüche, **dadurch gekennzeichnet, dass**
die Bremseinrichtung (2, 3, 4`) eine Bremsscheibe (2') aufweist, die mit einem Antriebsrad (10) des Fahrzeugs (1) oder mit einem Bremsrad des Fahrzeugs (1) gekoppelt ist, wobei das Antriebsrad (10) bzw. das Bremsrad form- und/oder reibschlüssig mit einem entsprechenden, wenigstens abschnittsweise entlang der Fahrstrecke angeordneten Element zusammenwirkt.

8. Fahrzeug (1) nach einem der vorhergehenden Ansprüche, **dadurch gekennzeichnet, dass**
die Bremseinrichtung (2, 3, 4') Bremsbacken umfasst, die auf ein an der Fahrstrecke angeordnetes feststehendes Bauteil einwirken und/oder Elektromagnete und/oder Magnete zur Erzeugung eines Wirbelstrombremseffekts, umfasst.

9. Verfahren zum Abbremsen eines Fahrzeugs (1) nach einem der vorhergehenden Ansprüche, umfassend die Schritte:
a) Messung einer Bremsverzögerung des Fahrzeugs (1) mittels eines Beschleunigungssensors (4);
b) Regelung der Bremsverzögerung durch Betätigen der Bremse (2) derart, dass die Bremsverzögerung einen vorgegebenen Sollwert annimmt, wobei eine vorgegebene maximale Bremsverzögerung nicht überschritten wird, wobei über einen bestimmten Bremsvorgang eine vordefinierte Bremsverzögerung abhängig von der Position des Fahrzeugs gemäß einem in der Bremssteuerungseinrichtung (3) hinterlegten ortsabhängigen Soll-Beschleunigungsprofil oder abhängig von der Zeit gemäß einem in der Bremssteuerungseinrichtung (3) hinterlegten zeitabhängigen Soll-Beschleunigungsprofil erzielt wird.

10. Verfahren nach Anspruch 9, **dadurch gekennzeichnet, dass**
der vorgegebene Sollwert eine konstante Bremsverzögerung ist.

11. Verfahren nach Anspruch 9 oder 10, **dadurch gekennzeichnet, dass**
die Regelung durch eine Betätigung der Bremse (2) derart erfolgt, dass durch abwechselndes Lösen bzw. Lockern und Schließen der Bremse (2) eine dem Sollwert entsprechende Bremsverzögerung erzeugt wird.

12. Verfahren nach einem der Ansprüche 9 bis 11, **dadurch gekennzeichnet, dass**
der Verfahrensschritt a) umfasst: Messung der Geschwindigkeit des Fahrzeugs (1) und Übertragung der gemessenen Geschwindigkeiten an die Bremssteuerungseinrichtung (3) als Parameter für die Regelung der Bremswirkung der Bremse (2).

## Claims

1. A rail-mounted car (1), comprising a braking device (2, 3, 4) disposed at the car (1), said braking device having a brake (2), and a brake-control device (3) for closed-loop control over the braking operation,
**characterised by** the fact that
the braking device has a sensor (4) for measuring braking deceleration of the car (1),
a time- or location-dependent set acceleration profile is stored in the brake-control device, and
the brake-control device (3) is configured such that it adjusts the braking action of the brake (2) as a function of the measured braking deceleration such that, via a certain braking operation, a predefined braking deceleration is achieved according to the time-dependent set acceleration profile depending on the time and the location-dependent set acceleration profile depending on the position of the car, without a predetermined maximum braking deceleration being exceeded.

2. The car (1) in accordance with claim 1, **characterised by** the fact that
the brake-control device (3) is configured such that it adjusts the braking force as a function of the measured braking deceleration such that, via a certain braking operation, a constant braking deceleration is achieved.

3. The car (1) in accordance with any of the previous claims, **characterised by** the fact that
the sensor (4) is an accelerometer.

4. The car (1) in accordance with any of the previous claims, **characterised by** the fact that
the brake-control device (3) is configured such that it actuates the brake (2) such that, through alternate releasing and/or loosening and applying of the brake (2), braking deceleration corresponding to the predefined braking deceleration is generated.

5. The car (1) in accordance with any of the previous claims, **characterised by** the fact that
the brake-control device (3) is configured such that it actuates the brake (2) such that, through alternate releasing and/or loosening and applying of the brake (2), an average braking deceleration is generated which is essentially equal to the predefined braking deceleration.

6. The car (1) in accordance with any of the previous claims, **characterised by** the fact that
the brake-control device (3) has a speed sensor (4') for measuring the speed of the car (1) and the measured speed is transmitted to the brake-control device (3) as a parameter for closed-loop control over the braking action of the brake (2).

7. The car (1) in accordance with any of the previous claims, **characterised by** the fact that
the braking device (2, 3, 4') has a brake disc (2') which is coupled to a drive wheel (10) of the car (1) or to a brake wheel of the car (1), wherein the drive wheel (10) and/or the brake wheel cooperates positively and/or frictionally with a corresponding element, which is disposed on at least sections of the circuit.

8. The car (1) in accordance with any of the previous claims, **characterised by** the fact that
the braking device (2, 3, 4') comprises brake shoes, which act on a fixed part disposed at the circuit and/or comprises electromagnets and/or magnets for generating an eddy current braking effect.

9. A method for braking a car (1), in accordance with any of the previous claims comprising the steps of:
a) Measurement of a braking deceleration of the car (1) by means of an accelerometer (4);
b) Closed-loop control over the braking deceleration by actuating the brake (2) such that the braking deceleration assumes a predetermined set value, without a predetermined maximum braking deceleration being exceeded, wherein a predefined braking deceleration over a specific braking operation is obtained dependent on the position of the vehicle in accordance with a location-dependent set acceleration profile stored in the brake control device (3) or dependent on the time in accordance with a time-dependent set acceleration profile stored in the brake control device (3).

10. The method in accordance with claim 9, **characterised by** the fact that the predetermined set value is a constant braking deceleration.

11. The method in accordance with claim 9 or 10, **characterised by** the fact that
the closed-loop control is effected by actuating the brake (2) such that, through alternate releasing and/or loosening and applying of the brake (2), a braking deceleration corresponding to the set value is generated.

12. The method in accordance with any of claims 9 to 11, **characterised by** the fact that
the method step a) comprises: Measurement of the speed of the car (1) and transmission of the measured speeds to the brake-control device (3) as a parameter for closed-loop control over the braking action of the brake (2).

## Revendications

1. Véhicule roulant sur rails (1), comprenant un système de frein (2, 3, 4) disposé sur le véhicule (1), qui comporte un frein (2) et un système de commande de frein (3) destiné à la régulation du processus de freinage,
**caractérisé en ce que**
le système de frein comporte un capteur (4) destiné à la mesure d'une décélération de freinage du véhicule (1),
un profil d'accélération de consigne dépendant du temps ou du lieu est enregistré dans le système de commande de frein (3), et
le système de commande de frein (3) est conçu de telle manière qu'il règle l'action de freinage du frein (2) en fonction de la décélération de freinage mesurée de telle manière que, pendant un processus de freinage donné, une décélération de freinage prédéfinie est obtenue sur selon le profil d'accélération de consigne dépendant du temps ou le profil d'accélération de consigne dépendant du lieu en fonction de la position du véhicule, une décélération de freinage maximale spécifiée n'étant pas dépassée.

2. Véhicule (1) selon la revendication 1, **caractérisé en ce que**
le système de commande de frein (3) est conçu de telle manière qu'il règle la force de freinage en fonction de la décélération de freinage mesurée de telle manière que, pendant un processus de freinage donné, une décélération de freinage constante est obtenue.

3. Véhicule (1) selon l'une des revendications précédentes, **caractérisé en ce que**
le capteur (4) est un capteur d'accélération.

4. Véhicule (1) selon l'une des revendications précédentes, **caractérisé en ce que**
le système de commande de frein (3) est conçu de telle manière qu'il actionne le frein (2) de sorte que, par le desserrage ou relâchement et le serrage du frein (2) en alternance, une décélération de freinage correspondant à la décélération de freinage prédéfinie est générée.

5. Véhicule (1) selon l'une des revendications précédentes, **caractérisé en ce que**
le système de commande de frein (3) est conçu de telle manière qu'il actionne le frein (2) de sorte que, par le desserrage ou relâchement et le serrage du frein (2) en alternance, une décélération de freinage moyenne est générée, qui est sensiblement égale à la décélération de freinage prédéfinie.

6. Véhicule (1) selon l'une des revendications précédentes, **caractérisé en ce que**
le système de commande de frein (3) comporte un capteur de vitesse (4') destiné à la mesure de la vitesse du véhicule (1), et la vitesse mesurée est transmise au système de commande de frein (3) comme paramètre pour la régulation de l'action de freinage du frein (2).

7. Véhicule (1) selon l'une des revendications précédentes, **caractérisé en ce que**
le système de frein (2, 3, 4') comporte un disque de frein (2'), qui est couplé à une roue motrice (10) du véhicule (1) ou à une roue de freinage du véhicule (1), la roue motrice (10) ou la roue de freinage coopérant par complémentarité de forme et/ou par friction avec un élément correspondant disposé au moins sur certaines parties le long du parcours.

8. Véhicule (1) selon l'une des revendications précédentes, **caractérisé en ce que**
le système de frein (2, 3, 4') comprend des mâchoires de frein, qui agissent sur un élément structural fixe disposé sur le parcours et/ou comprend des électroaimants et/ou des aimants destinés à générer un effet de freinage à courants de Foucault.

9. Procédé de freinage d'un véhicule (1) selon l'une des revendications précédentes, comprenant les étapes :
a) mesure d'une décélération de freinage du véhicule (1) au moyen d'un capteur d'accélération (4) ;
b) régulation de la décélération de freinage par actionnement du frein (2) de telle manière que la décélération de freinage prend une valeur de consigne spécifiée, une décélération de freinage maximale spécifiée n'étant pas dépassée, une décélération de freinage prédéfinie étant obtenue par un processus de freinage déterminé en fonction de la position du véhicule selon un profil d'accélération de consigne dépendant du lieu enregistré dans le dispositif de commande de freinage (3), ou en fonction du temps selon un profil d'accélération de consigne dépendant du temps enregistré dans le dispositif de commande de freinage (3).

10. Procédé selon la revendication 9, **caractérisé en ce que**
la valeur de consigne spécifiée est une décélération de freinage constante.

11. Procédé selon la revendication 9 ou 10, **caractérisé en ce que**
la régulation est effectuée par un actionnement du frein (2) de telle manière que, par le desserrage ou relâchement et le serrage du frein (2) en alternance, une décélération de freinage correspondant à la valeur de consigne est générée.

12. Procédé selon l'une des revendications 9 à 11, **caractérisé en ce que**
l'étape de procédé a) comprend : la mesure de la vitesse du véhicule (1) et la transmission des vitesses mesurées au système de commande de frein (3) comme paramètre pour la régulation de l'action de freinage du frein (2).
